# EUROPEAN PATENT APPLICATION

(11) **EP 2 135 502 A1**
(43) Date of publication of application: **23.12.2009**
(21) Application number: 09162734.9
(22) Date of filing: 15.06.2009
(51) Int. Cl.: A01D 75/28

(54) **Cleaning shoe tilt control**

(30) Priority: 18.06.2008 US 141461
(71) Applicant: Deere & Company, Moline, IL 61265-8098 (US)
(72) Inventor: Talbi, Aziz, Davenport, IA 52807 (US)
(74) Representative: Holst, Sönke

(57) **Abstract**

A system (101) is provided for controlling the angle of tilt of a cleaning shoe (112) in an agricultural harvester (100). The cleaning shoe is automatically tilted by a microcontroller (134) at least in partial response to signals the microcontroller receives from a grain loss detector (132) that indicates the amount of grain lost from the cleaning shoe.

## Description

The present invention relates to cleaning shoes for agricultural harvesters. More particularly, it relates to control systems for controlling the lateral tilt of cleaning shoes for agricultural harvesters.

Agricultural harvesters commonly use cleaning shoes to separate grain from unwanted crop material. Cleaning shoes are typically arranged as longitudinally extending troughs, often called bays, having a semi permeable floor made out of a semi permeable material such a screen, a mesh, or a plurality of slats. These bays are typically shaken fore-and-aft as air is blown up through the semi permeable bay floors to lift up and blow away lighter unwanted crop material such as straw and chaff, while permitting the grain to fall downward through the semi permeable floor into a second cleaner, commonly called a chaffer. The bay floors are typically flat, which permits gravity to spread the crop material relatively evenly across them. An even spreading of the crop material permits the air and the shaking to separate the grain from the unwanted crop material.

When an agricultural harvester is driven on a field with a slope, such that the left side of the agricultural harvester is higher than the right side (or vice versa), the bays and bay floors are tilted with respect to the ground. Such an arrangement prevents gravity from evenly distributing the crop material over the bay floors. When this occurs, crop material with entrained grain is ejected from the rear of the agricultural harvester and wasted.

One solution has been to mount the bays on pivots that permit the bays and bay floors to be tilted to the left or the right. A microcontroller is provided to monitor a vehicle tilt sensor and an actuator is provided to tilt the bays until the bay floors are level, even though the agricultural harvester itself is tilted to one side as it travels through the field. This arrangement reduces grain loss, because the bays are again level with the ground, which permits the shaking, the air, and gravity to spread the crop material out in a relatively even layer on the bay floors.

A further improvement for when the agricultural harvester has been running tilted to the left, for example, has been to not just tilt the bays back to the right until the bay floors horizontal, but to tilt the bays a few degrees farther to the right, beyond the horizontal, to spread the crop material out faster. For certain crop materials, under certain load conditions, this extra tilt reduces grain losses more effectively than purely horizontal bays.

In both of these arrangements, the angle at which the cleaning shoe is tilted is a function of the angle of tilt of the agricultural harvester and a "fudge factor" that is preprogrammed into the microcontroller that controls the tilt of the bays. Such arrangements reduce grain loss; however, this reduction is not found by looking at the grain loss directly. Such arrangements assume certain ideal responses of the crop material as it is vibrated along the bays, to the rear of the bays, and out of the agricultural harvester. What is needed is a control system for automatically tilting the bays based upon actual grain losses, and not just upon the angle of the agricultural harvester with respect to the ground and the "fudge factor." It is an object of this invention to provide such a system.

This object is achieved with the subject matter of claim 1. The dependent claims recite advantageous features of embodiments of the invention.

A system for controlling the angle of a cleaning shoe of an agricultural harvester having a microcontroller connected to a grain loss sensor to determine the actual grain loss at the rear of the cleaning shoe. The microcontroller is configured to use this actual grain loss, either alone or in combination, with other factors such as the angle of the agricultural harvester and the angle of the cleaning shoe to change the cleaning shoe angle until grain loss is minimized.

A system for controlling the angular orientation of a cleaning shoe in an agricultural harvester is provided. The system comprises at least one grain loss detector disposed to sense grain that leaves the rear of the cleaning shoe mixed with unwanted crop material and to provide a grain loss signal. The system also comprises a vehicle tilt sensor disposed on the agricultural harvester to sense the angular orientation of the agricultural harvester. Additionally, the system comprises a cleaning shoe tilt actuator coupled to the cleaning shoe to tilt the cleaning shoe side-to-side with respect to the chassis of the agricultural harvester. Furthermore, the system comprises at least one microcontroller coupled to the at least one grain loss sensor, the vehicle tilt sensor, and the cleaning shoe tilt actuator, wherein the at least one microcontroller is configured to automatically and periodically determine the side-to-side angle of tilt of the agricultural harvester and to automatically and periodically tilt the cleaning shoe, and to use the grain loss signal provided by the grain loss detector to determine how far to tilt the cleaning shoe.

The microcontroller may be configured to use the grain loss signal to determine when to stop tilting the cleaning shoe with the cleaning shoe tilt actuator. The system may further comprise an operator input device configured to input a threshold grain loss value that the at least one microcontroller is configured to use to determine whether to start or to stop tilting the cleaning show with the cleaning shoe tilt actuator. The at least one grain loss detector may comprise at least a first and a second grain loss detector, and further wherein the microcontroller is configured to compare the grain loss indicated by the first grain loss detector with the grain loss indicated by the second grain loss detector and to tilt the cleaning shoe based at least upon this difference. In addition, the cleaning shoe may comprise a chaffer and a sieve, and the cleaning shoe tilt actuator may be coupled to the chaffer to tilt the chaffer side-to-side with respect to the chassis of the agricultural harvester.

An embodiment of the invention is shown in the drawings, in which:
FIG. 1 is a side view of an agricultural harvester and a system for controlling the lateral tilt angle of a cleaning shoe.
FIG. 2 is a cross sectional view of the agricultural harvester of FIG. 1 taken at section line 2-2 in FIG. 1 showing a cleaning shoe tilt actuator and several bays that comprise the cleaning shoe.

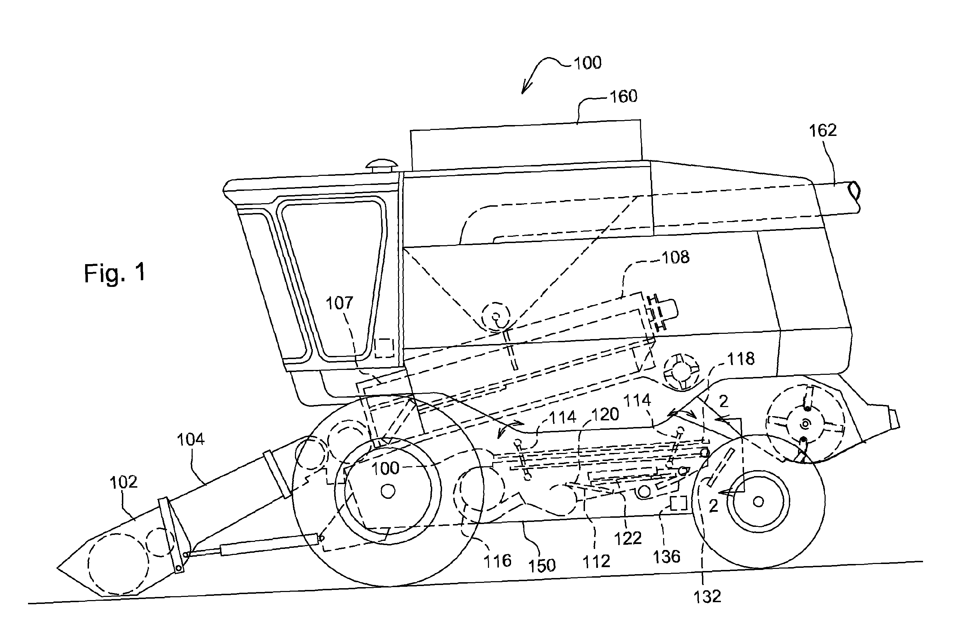

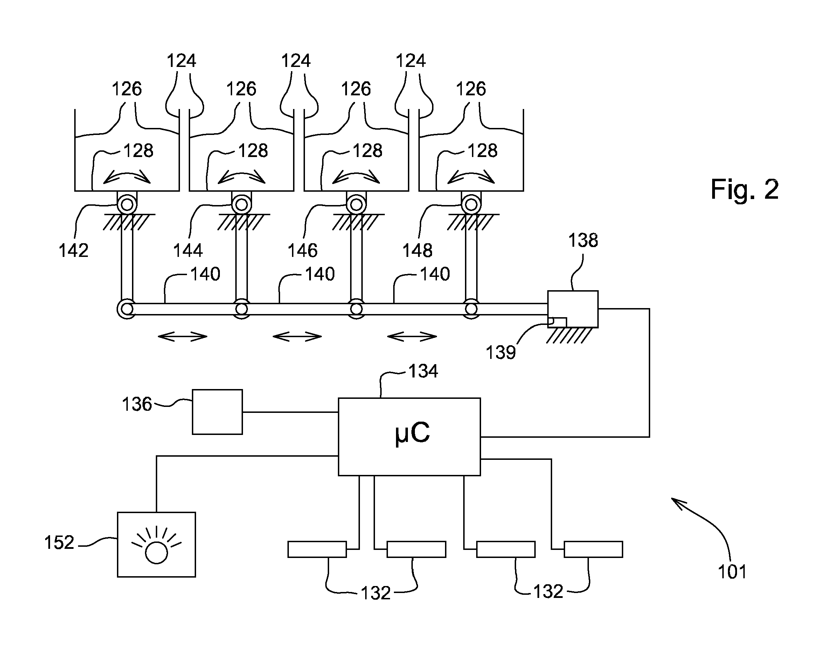

A system 101 (see FIG. 2) is embodied in an agricultural harvester 100 shown in side elevation in FIG. 1. The agricultural harvester 100 receives crop material cut by a header 102. This crop material is transmitted from the header 102 through a feeder house 104 and into the agricultural harvester 100. The agricultural harvester 100 comprises a rotor 107 and an assembly 108 that thrashes the crop material. Once thrashed, the crop material is directed to a cleaning shoe 112. The cleaning shoe 112 is suspended on four arms 114. The left two arms of the four arms 114 are shown. The right two arms of the four arms 114 are in identical positions on the right side of the agricultural harvester 100. The four arms 114 are configured to permit the cleaning shoe 112 to oscillate fore-and-aft (i.e., generally parallel to the longitudinal axis of the agricultural harvester 100). The cleaning shoe 112 comprises a chaffer 120 on top of a sieve 122. The chaffer 120 and the sieve 122 are both disposed in a generally horizontal orientation.

A fan 116 is disposed to blow air upward through the semi permeable bottom of the chaffer 120 to lift unwanted crop material and carry it backward toward the rear end of the chaffer 118 where it falls onto a grain loss detector 132. The grain and crop material then falls to the ground.

The grain in the crop material that is heavy enough to fall out of the crop material falls through the semi permeable bottom of the chaffer 120 and onto sieve 122 for further cleaning. Then, the grain is carried up a grain elevator (not shown) and deposited in a grain tank 160. The grain is then unloaded through a grain auger 162.

Referring now to FIG. 2, the chaffer 120 (see FIG. 1) includes several bays 124 that have the form of a trough and are arranged side-by-side within the agricultural harvester 100. The bays 124 extend generally horizontally and parallel to the longitudinal direction of the agricultural harvester 100, and in the direction of travel of the agricultural harvester 100. These bays have sidewalls 126 and semi permeable floors 128. The semi permeable floors 128 permit much of the grain to fall therethrough while preventing much of the unwanted crop material from passing therethrough. The crop material that does not pass through the floor 128 is carried rearward by the air and movement of the cleaning shoe 112 (see FIG. 1) until the crop material falls off the rear of each bay 124. As the crop material falls, it impacts grain loss detectors 132 respectively placed at the rear of each bay 124.

The grain loss detectors 132 may be acoustic detectors that are configured to sense the impact of falling crop material on the surface of the grain loss detectors 132 before falling to the ground. The grain loss detectors 132 emit a distinctive electrical signal as grain that was not separated from the unwanted crop material in the chaffer 120 (see FIG. 1) falls on the grain loss detectors 132. The grain loss detectors 132 quantitatively indicate the amount of grain loss.

The grain loss detectors 132 may be supported on the frame 150 of the agricultural harvester 100 at the rear of each bay 124. The grain loss detectors 132 are coupled to a digital microcontroller 134 which is configured to read the electrical signals from the grain loss detectors 132 and determine the amount of grain loss that is occurring.

Microcontroller 134 is also coupled to a vehicle tilt sensor 136 that may be coupled to the chassis of the agricultural harvester 100. Vehicle tilt sensor 136 produces a signal indicating the lateral (side-to-side) tilt angle of the agricultural harvester 100. Vehicle tilt sensor 136 provides this signal to microcontroller 134, which in turn is configured to process this signal and determine what the vehicle lateral tilt angle is.

A cleaning shoe tilt actuator 138 is coupled to each of the bays 124 to collectively tilt them. The cleaning shoe tilt actuator 138 is coupled to the bays 124 by a linkage 140 that tilts the bays 124 about pivots 142, 144, 146, 148 that support the bays 124. Alternatively, the cleaning shoe tilt actuator 138 could be configured to tilt the chassis of the agricultural harvester 100 with respect to the ground and thereby control the tilt of the cleaning shoe 112.

Microcontroller 134 is coupled to the cleaning shoe tilt actuator 138 to drive the cleaning shoe tilt actuator 138 and cause it to simultaneously tilt the bays 124 both left and right with respect to the agricultural harvester frame 150. The cleaning shoe tilt actuator 138 preferably has an internal position sensor 139 coupled to microcontroller 134 to indicate the tilt position of the cleaning shoe 112 (see FIG. 1) with respect to the agricultural harvester frame 150 or with respect to horizontal (or vertical). Alternatively, an actuator such as a stepping motor can be employed as the cleaning shoe tilt actuator 138 whose position is known by the microcontroller 134 based on the commands sent to the actuator. The cleaning shoe 112 (see FIG. 1) may have a tilt sensor 137 coupled to one or more of the bays 124 to indicate the angle of the one or more bays 124 with respect to horizontal.

During normal operation, the microcontroller 134 periodically receives a signal from the vehicle tilt sensor 136 indicating the angle of tilt of the agricultural harvester 100. Occasionally this signal indicates that the agricultural harvester 100 has tilted from is previously measured position. This tilt also causes the cleaning shoe 112 (see FIG. 1) and its bays 124 to tilt an equal amount in the same direction. When this happens, the grain tends to flow to the downhill side of each bay 124 and pile up. This unwanted crop material and grain is then carried to the end of each bay 124 and falls off onto the grain loss detectors 132. The grain loss detectors 132 responsively generate a signal indicating an increase in the amount of grain loss. This increased grain loss signal is sensed by microcontroller 134. When the microcontroller 134 senses that the grain loss has increased, the microcontroller 134 is configured to signal the cleaning shoe tilt actuator 138 to tilt the cleaning shoe 112 (see FIG. 1) in a direction opposite to the tilt direction of the agricultural harvester 100 indicated by the vehicle tilt sensor 136 to tilt the cleaning shoe 112 (see FIG. 1) back to a more horizontal orientation. Microcontroller 134 is configured to continue tilting the cleaning shoe 112 (see FIG. 1) back to a more horizontal position for as long as this tilting reduces grain loss a sufficient amount as indicated by the grain loss detectors 132 and as determined by the microcontroller 134. In this manner, the lateral angular orientation of the cleaning shoe 112 (see FIG. 1) and the individual bays 124 that comprise the cleaning shoe 112 (see FIG. 1) are automatically controlled in a manner that minimizes their actual measured grain loss.

The operator may be optionally permitted to adjust the sensitivity of the system 101 in the following manner. The operator can select the sensitivity of the system 101 using operator input device 152, which is coupled to the microcontroller 134. The operator input device 152 may be a knob, dial, lever, switch, touch screen or button to transmit a signal indicating the operator's selection to the microcontroller 134.

Microcontroller 134 is configured to wait until the measured grain loss indicated by the grain loss detectors 132 reaches the value indicated by the operator input device 152 before it begins to adjust the angle of the cleaning shoe 112 (see FIG. 1). Similarly, microcontroller 134 is configured to wait until the measured grain loss indicated by the grain loss detectors 132 drops back to the value indicated by the operator input device 152 before it stops adjusting the angle of the cleaning shoe 112 (see FIG. 1).

In another optional configuration, microcontroller 134 is configured to monitor the difference in grain loss between different grain loss detectors 132 in order to determine whether to tilt the cleaning shoe 112 (see FIG. 1). For example, if microcontroller 134 senses that the difference in the measured grain loss between the leftmost and rightmost bays 124 in FIG. 2 is greater than a threshold difference, it is configured to operate the cleaning shoes tilt actuator 138 to tilt the cleaning shoe 112 (see FIG. 1) in a certain direction, preferably in a direction toward the bay 124 having the least grain loss until the difference in grain loss drops below the threshold. As in the previous example, the operator can set this threshold using the operator input device 152. If the operator input device 152 is not provided, the threshold value can be established automatically by the microcontroller 134.

Other configurations of the above system can be made without departing from the scope of the claims. For example, more than one microcontroller may be provided to sense the detector and sensors and to drive the actuator. These more than one microcontrollers can be coupled together over a communications network such as a CAN bus to transmit information to each other to permit the overall combination of more than one microcontroller to perform the functions described herein. The cleaning shoe can have one or more bays. As little as one grain loss detector can be provided to sense the loss of grain mixed with the unwanted crop material. More than one cleaning shoe tilt actuator can be used to position the cleaning shoe. The cleaning shoe tilt actuator can be an actuator that tilts the cleaning shoe with respect to the chassis of the agricultural harvester, as shown herein, or may be an actuator configured to tilt the agricultural harvester with respect to the ground (i.e. an actuator that levels the agricultural harvester) as shown in US 3 712 635 A. In this arrangement, the wheels on either side of the agricultural harvester can be selectively raised or lowered to maintain the agricultural harvester in any lateral tilt position with respect to the ground, but preferably to a substantially horizontal position in which grain loss is minimized by using the grain loss detector as described above. In this arrangement, the microcontroller will control the tilt angle of the vehicle chassis as a whole (including the bays and the cleaning shoes mounted therein) rather than controlling the tilt angle of the bays with respect to the chassis. US 3 712 635 A is incorporated herein by reference for all that it teaches.

## Claims

1. A system for controlling the angular orientation of a cleaning shoe in an agricultural harvester, the system comprising:
at least one grain loss detector disposed to sense grain that leaves the rear of the cleaning shoe mixed with unwanted crop material and to provide a grain loss signal;
a vehicle tilt sensor disposed on the agricultural harvester to sense the angular orientation of the agricultural harvester;
a cleaning shoe tilt actuator coupled to the cleaning shoe to tilt the cleaning shoe side-to-side with respect to the ground; and
at least one microcontroller coupled to the at least one grain loss sensor, the vehicle tilt sensor, and the cleaning shoe tilt actuator;
wherein the at least one microcontroller is configured to automatically and periodically tilt the cleaning shoe, and to use the grain loss signal provided by the grain loss detector to determine how far to tilt the cleaning shoe.

2. The system of claim 1, wherein the microcontroller is configured to use the grain loss signal to determine when to stop tilting the cleaning shoe with the cleaning shoe tilt actuator.

3. The system of claim 1, wherein the microcontroller is configured to use the grain loss signal to determine when to start tilting the cleaning shoe with the cleaning shoe tilt actuator.

4. The system of claim 1, further comprising an operator input device configured to input a threshold grain loss value that the at least one microcontroller is configured to use to determine whether to start or to stop tilting the cleaning shoe with the cleaning shoe tilt actuator.

5. The system of claim 1, wherein the at least one grain loss detector comprises at least a first and a second grain loss detector, and further wherein the microcontroller is configured to compare the grain loss indicated by the first grain loss detector with the grain loss indicated by the second grain loss detector and to tilt the cleaning shoe based at least upon this difference.

6. The system of claim 1, wherein the cleaning shoe comprises a chaffer and a sieve, and further wherein the cleaning shoe tilt actuator is coupled to the chaffer to tilt the chaffer side-to-side with respect to the chassis of the agricultural harvester.

7. The system of claim 1, wherein the chaffer comprises at least one bay, and further wherein the cleaning shoe tilt actuator is coupled to at least one bay to tilt the at least one bay side-to-side with respect to the chassis of the agricultural harvester.
